# EUROPÄISCHE PATENTSCHRIFT

(11) **EP 2 354 806 B1**
(45) Veröffentlichungstag und Bekanntmachung des Hinweises auf die Patenterteilung: **09.05.2012**
(21) Anmeldenummer: 10152298.5
(22) Anmeldetag: 01.02.2010
(51) Int. Cl.: G01S 7/481, G01S 17/02, G01S 17/46, G01S 17/89, G02B 13/06

(54) **Optoelektronischer Sensor**
Optoelectronic sensor
Capteur optoélectronique

(43) Veröffentlichungstag der Anmeldung: 10.08.2011
(73) Patentinhaber: SICK AG, 79183 Waldkirch (DE)
(72) Erfinder: Wüstefeld, Martin, 79350 Sexau (DE); Hammes, Markus, 79104 Freiburg (DE)
(74) Vertreter: Hehl, Ulrich

(56) Entgegenhaltungen:
- EP-A2- 2 026 101
- WO-A1-2006/079951
- US-A- 5 461 473
- US-B1- 6 204 916
- US-B1- 6 521 882
- US-B1- 7 636 204

## Beschreibung

Die Erfindung betrifft einen optoelektronischen Sensor mit 360°-Empfangsoptik sowie ein Verfahren zur Überwachung eines Überwachungsbereichs mit 360°-Optiken nach dem Oberbegriff von Anspruch 1 beziehungsweise 12.

Für zahlreiche Vermessungs- und Überwachungsanwendungen werden Laserscanner eingesetzt, welche die räumliche Struktur ihrer Umgebung in Form eines Abstandsprofils einer festgelegten Ebene erfassen. Dazu wird ein Sendestrahl mittels eines Drehspiegels über einen Winkelbereich bis zu 360° abgelenkt, um die Ebene in diskreten Winkelschritten abzutasten. Zu jedem Winkel wird ein kurzer Lichtpuls ausgesandt und die Lichtlaufzeit bis zum Empfang des aus der Überwachungsebene von einem Objekt reflektierten oder remittierten Sendestrahls gemessen, die dann über die Lichtgeschwindigkeit in eine Entfernungsinformation umgerechnet wird. Ein alternatives Verfahren zur Lichtlaufzeitbestimmung ist Messung der Phasenverschiebung zwischen amplitudenmoduliertem Sendelicht und Empfangslicht.

Trotz des bewährten Prinzips haben Laserscanner auch Nachteile. Durch die serielle Abtastung der Scanbewegung ist die Messfrequenz auf Werte im Bereich um 30Hz begrenzt. Die mechanische Drehbewegung macht das System anfällig für mechanische Umwelteinflüsse. Der Platzbedarf für den Drehspiegel führt zu einer gewissen Mindestbaugröße. In den meisten praktischen Ausführungen verdeckt der mechanische Aufbau des Scanners und des Drehspiegels einen Teil des horizontalen Sichtbereichs, so dass anstelle von 360° meist nur bis zu 270° Grad zur Verfügung stehen. Ein Laserscanner gewinnt nur Abstandsinformationen in einer Ebene und ist blind für die Bereiche oberhalb oder unterhalb der Ebene. Dies muss bei sicherheitstechnischen Anwendungen in Form von Aufschlägen auf den Sicherheitsabstand berücksichtigt werden. Schließlich entstehen durch die Präzisionsanforderungen und die aufwändige Justage und Montage relativ hohe Kosten.

Es ist bekannt, Kamerachips nach einem der oben genannten Lichtlaufzeitprinzipien aufzubauen und so in jedem Pixel nicht nur einen Grau- oder Farbwert, sondern auch eine Entfernungsinformation zu gewinnen. Dazu wird beispielsweise bei einem dreidimensionalen CMOS-Bildsensor gemäß US 6,323,942 B1 jedem Pixel ein Zähler zugeordnet, um eine Pulslaufzeit zu messen. Bekannt sind auch sogenannte Photonmischdetektoren, die in intelligenten Pixeln mit Hilfe einer Ladungsschaukel den Phasenunterschied zu einem ausgesandten amplitudenmodulierten Sendelicht messen. Mit derartigen Bildsensoren lässt sich prinzipiell simultan ein Abstandbild erzeugen. Kameras haben jedoch einen begrenzten Sichtwinkel von bestenfalls 90°, der somit noch weit unterhalb der für den Laserscanner genannten 270° liegt.

In der DE 20 2006 014 939 U1 wird deshalb eine Superweitwinkeloptik eingesetzt, um den vor dem Sensor liegenden Halbraum nahezu vollständig zu erfassen. Dabei ist die Linse in ihrer unteren Hälfte von einem ersten Reflektor eingefasst, der eine zentrale Öffnung am Hals für aus der Linse austretendes Empfangslicht aufweist, und diesem gegenüberliegend ist ein zweiter Reflektor angeordnet, so dass sämtliche durch die Linse einfallenden Lichtstrahlen von dem ersten Reflektor zurück auf den zweiten Reflektor reflektiert werden, um dann durch den Hals auf einen Lichtlaufzeit-Bildsensor zu fallen. Durch die mindestens zweifache Reflexion entstehen hier aber Mehrdeutigkeiten, welche die eindeutige räumliche Zuordnung eines Entfernungswerts verhindern. Zudem muss eine Linse für eine solche Superweitwinkeloptik sehr hochwertig sein, ohne dass dadurch verhindert wird, dass gerade in den Randbereichen des zu überwachenden Halbraums große Abbildungsfehler entstehen. Die Überwachung einer Ebene quer zu der optischen Achse des Bildsensors, die einer 360°-Scanebene entspricht, leidet deshalb in besonders hohem Maße unter Abbildungsfehlern, und ein Winkelbereich unterhalb dieser Ebene ist auch wegen Verdeckung durch den ersten Reflektor kaum noch auflösbar. Insgesamt erreicht diese Optik nicht die Qualität, die für eine zuverlässige Überwachung einer 360°-Ebene erforderlich ist.

Das CSEM (Centre Suisse d'Electronique et de Microtechnique) bietet unter der Bezeichnung MuFly eine 360°-Kamera für autonome Fluggeräte an. Dabei sendet eine kranzförmige Anordnung von radial nach außen gerichteten Lasermodulen jeweils ein fächerförmiges Lichtbündel aus, das in der Draufsicht ein Netz aus feinen Linien bildet. Dies wird mit einem catadioptrischen Linsensystem, das aus einem hyperbolischen Spiegel und einer Abbildungslinse besteht, auf einen Bildsensor abgebildet. Mittels Triangulation werden Entfernungen bestimmt. Durch das Triangulationsprinzip wird, will man mehr als ein grobes Profil des Überwachungsbereichs gewinnen, eine sehr große Anzahl von Lichtquellen benötigt, da diese Anzahl die Auflösung in Umfangsrichtung begrenzt.

Die EP 2 026 101 A2 offenbart eine Distanzmessungsvorrichtung, die mit einem pulsbasierten Laserradar arbeitet. Dabei wird Sendelicht über ein 360°-Spiegelelement ausgesandt und das an Objekten reflektierte Empfangslicht von einem gleichartigen 360°-Spiegelelement auf einen Bildsensor gelenkt. Ein Zeitmesser bestimmt die Lichtlaufzeit für unabhängige Pixel.

In der US 7,636,204 B1 wird ein 360°-Betrachtungsystem für das Innere eines zylindrischen Körpers beschrieben. Der mikroskopartige Aufbau dient beispielsweise der Inspektion von Bohrungen. Ein lichtführendes optisches Element mit einer zylindrischen Eintrittsfläche, einer konischen Umlenkfläche und einer konvexen Austrittsfläche lenkt das Licht aus einer 360°-Umgebung des Innenraums des zylindrischen Körpers nach unten zu einem Objektiv um.

Aus der WO 2006/079951 A1 ist ein Mobiltelefon mit einer 360°-Kamera bekannt, welche im Freisprechmodus die Position umstehender Gesprächsteilnehmer ortet. Die Optik der Kamera weist in einer Ausführungsform einen quaderförmigen lichtführenden Körper mit einer Aussparung auf, welche das Licht aus 360° zum Bildsensor umlenkt.

Es ist daher Aufgabe der Erfindung, einen optoelektronischen Sensor mit großem Sichtwinkel zur zuverlässigen Überwachung zumindest einer Ebene anzugeben.

Diese Aufgabe wird durch einen Sensor mit 360°-Optik gemäß Anspruch 1 beziehungsweise ein Verfahren zur Überwachung eines Überwachungsbereichs mit 360°-Optiken gemäß Anspruch 12 gelöst. Dabei geht die Erfindung von dem Grundgedanken aus, Entfernungen ohne bewegliche Teile mit einem Lichtlaufzeit-Bildsensor zu bestimmen. Für einen großen Sichtbereich wird eine 360°-Optik eingesetzt, die gezielt das Licht aus einer Überwachungsebene und gegebenenfalls einem gewissen, die Überwachungsebene umfassenden Winkelbereich umlenkt und zugleich strahlformt. Diese Lösung hat den Vorteil, dass ein leichter, kompakter und kostengünstiger Sensor entsteht, der gegenüber einem Scanner zusätzliche Funktionalität ermöglicht. Da keine mechanisch bewegten Teile wie ein Drehspiegel benötigt werden, entsteht eine hohe mechanische Stabilität. Die synchrone Auswertung in alle Raumrichtungen führt zu sehr kurzen Ansprechzeiten. Gegenüber der Ausnutzung nur einer Zeile eines Matrixbildsensors zur Ebenenüberwachung in einer herkömmlichen Kamera werden erfindungsgemäß alle Pixel genutzt, ohne dass eine Sonderanfertigung erforderlich wird. Es entsteht eine günstige Änderung der Anzahl von Pixeln zur Objektgrößenbestimmung mit dem Objektabstand, denn bei nahem Objektabstand wird das Objekt tendenziell durch weniger, bei weiterem Objektabstand durch mehr Pixel repräsentiert als bei einer herkömmlichen Optik.

Die 360°-Empfangsoptik ermöglicht eine Rundumsicht in den Überwachungsbereich. Denkbar und von der Erfindung umfasst ist auch eine Empfangsoptik, die aus einem Rotationskörper mit Drehung um weniger als 360° entsteht und die einen entsprechend verringerten Sichtwinkel aufweist. Fertigungstechnisch bietet sich in erster Linie ein Winkel von 180° an. Bei noch kleineren Winkeln geht zunehmend der Vorteil der Erfindung gegenüber einem herkömmlichen Objektiv verloren. Auch eine Empfangsoptik mit anderen Sichtwinkeln als 360°, beispielsweise gleich oder oberhalb 180° beziehungsweise gleich oder oberhalb 270°, wird entgegen dem unmittelbaren Begriffsinhalt als 360°-Optik bezeichnet.

Der Überwachungsbereich ist entweder eine Ebene senkrecht zu der Symmetrieachse der 360°-Empfangsoptik oder ein Winkelbereich, der diese Ebene umfasst. Im letzteren Fall entsteht als Überwachungsbereich das Komplement eines Doppelkegels mit dem Sensor in dem Punkt, in dem sich die beiden Kegelspitzen berühren. Der Winkel des umlaufenden Winkelbereichs beträgt beispielsweise 30°, 10°, 5° oder nur einige Grad, wie 3° oder 1° oder darunter. Dieser Winkel ist der Differenzwinkel zu dem Öffnungswinkel des Doppelkegels. Durch einen solchen vertikal erweiterten Sichtbereich können zumindest einige 3D-Informationen über ein erfasstes Objekt gewonnen und damit beispielsweise auch schon im Voraus die Annäherung eines Objekts an die mittige Überwachungsebene erkannt werden. Der Winkel ist unter anderem durch die energetische Bilanz und die Anforderungen an die 360°-Optiken begrenzt.

Die Lichteintrittsfläche und/oder die Lichtaustrittsfläche der 360°-Empfangsoptik ist bevorzugt konvex. Eine konvexe Lichteintrittsfläche wirkt wie eine Empfangslinse, um das angesprochene Doppelkegelkomplement statt nur einer einzelnen Überwachungsebene abzubilden. Eine konvexe Lichtaustrittsfläche bündelt das Empfangslicht auf den Bildsensor, um eine Objektivlinse zu ersetzen oder mit Objektivlinsen zwischen Lichtaustrittsfläche und Bildsensor zusammen zu wirken. So erfüllt die 360°-Empfangsoptik als sehr kompaktes und kostengünstiges optisches Element mehrere Aufgaben und führt dabei zu einer besonders guten Abbildung des Überwachungsbereichs.

Die konische Ausnehmung der 360°-Empfangsoptik weist bevorzugt einen Öffnungswinkel von 90° auf. Damit ist ein im Wesentlichen rechter Winkel gemeint, so dass die Innenflächen des Konus in etwa in einem Winkel von 45° zur Hauptachse und zu der Überwachungsebene stehen, um einfallendes Licht zur Lichtaustrittsfläche zu spiegeln. Die Spiegelung wird durch Totalreflexion bewirkt.

In einer bevorzugten Weiterbildung sind die Flächen der Ausnehmung der 360°-Empfangsoptik beschichtet oder verspiegelt, um die Umlenkung unabhängig vom Einfallswinkel vollständig zu machen. Besonders bevorzugt sind die Flächen als dichroitische Spiegelflächen ausgebildet. Die 360°-Optik wirkt so zusätzlich als optischer Bandpassfilter für einen Nutzlichtfrequenzbereich. Dann wird nur Nutzlicht beispielsweise innerhalb des Frequenzbereichs von Sendelicht des Sensors gespiegelt und anderes Licht transmittiert.

Die konische Ausnehmung der 360°-Empfangsoptik erstreckt sich vorzugsweise so weit in Richtung der ersten Hauptachse wie die Lichteintrittsfläche. So wird sämtliches aus dem Überwachungsbereich einfallendes Licht zu dem Bildsensor umgelenkt. Die gleiche Erstreckung ist nicht zwingend genau, sondern es ist eine optisch effektiv gleiche Erstreckung gemeint. Wird beispielsweise das einfallende Empfangslicht durch eine konvexe Lichteintrittsfläche gebündelt, so genügt auch eine Erstreckung des Konus, die etwas geringer ist als diejenige der Lichteintrittsfläche.

Die 360°-Empfangsoptik weist eine Sternblende auf, welche den Überwachungsbereich in Sektoren aufteilt. Die Sternblende umfasst zum Beispiel mehrere plattenförmige, undurchsichtige Bereiche, welche in einer Draufsicht sternförmig von der Hauptachse radial nach außen verlaufen beziehungsweise längs einer Verbindungslinie von der Hauptachse in die Ecken eines senkrecht zu der Hauptachse liegenden, regelmäßigen Vielecks angeordnet sind. Diese plattenförmigen Bereiche können die Empfangsoptik durchdringen oder ihr vorgelagert sein. Eine Sternblende begrenzt Abbildungsfehler der 360°-Empfangsoptik, weil sie streifend auftreffendes Licht aus Nachbarsektoren unterdrückt. Dies führt zu einer höheren Auflösung des Sensors.

Die Empfangspixel in dem Bildsensor sind bevorzugt in konzentrischen Kreisen angeordnet, wobei insbesondere die Fläche der Empfangspixel von äußeren Kreisen zu inneren Kreisen hin abnimmt. Eine solche Anordnung ist an die 360°-Empfangsoptik angepasst und führt daher zu einer treueren Abbildung der Überwachungsebene. Die Alternative eines matrixförmigen Bildsensors hat dagegen den Vorteil, dass ein Standardbauteil verwendbar ist.

Vorzugsweise ist eine zusätzliche 360°-Sendeoptik in Form eines Rotationskörpers mit Rotationssymmetrie zu einer zweiten Hauptachse vorgesehen, wobei die 360°-Sendeoptik an ihrem bezüglich der zweiten Hauptachse oberen Ende eine Lichteintrittsfläche in einer Ebene senkrecht zu der zweiten Hauptachse, eine umlaufende Lichtaustrittsfläche konzentrisch und im Wesentlichen parallel zu der zweiten Hauptachse, so dass der von dem Lichtsender beleuchtete Bereich eine Ebene senkrecht zu der zweiten Hauptachse oder einen umlaufenden Winkelbereich einschließlich dieser Ebene bildet, sowie eine konische Ausnehmung an einem der Lichteintrittsfläche bezüglich der zweiten Hauptachse gegenüberliegenden unteren Ende aufweist. Die 360°-Sendeoptik hat damit prinzipiell den gleichen Aufbau wie die 360°-Empfangsoptik, wobei natürlich die Rolle der Lichteintritts- und -austrittsflächen vertauscht ist. Auch sind Angaben wie "oben" und "unten" relativ zu der Sendeoptik und nicht absolut zu verstehen.

Zur optimalen Nutzung der Sendeleistung sollten der ausgeleuchtete Bereich und der Überwachungsbereich übereinstimmen. Die 360°-Sendeoptik begrenzt die Beleuchtung auf den notwendigen Bereich und erlaubt damit verhältnismäßig geringe Sendeleistungen oder größere Reichweiten. Eine separate 360°-Sendeoptik hat den Vorteil, dass die jeweiligen 360°-Optiken und deren Lichteintritts- und -austrittsflächen für ihre unterschiedlichen Aufgaben optimierbar sind. So ist auch möglich, den beleuchteten Bereich etwas größer zu wählen als den Überwachungsbereich, oder umgekehrt. Bei einer denkbaren alternative Verwendung derselben 360°-Optik für Sender und Bildsensor beispielsweise mittels Strahlteiler entfällt dieser Gestaltungsvorteil.

Die Lichteintrittsfläche der 360°-Sendeoptik ist bevorzugt konvex und/oder die Lichtaustrittsfläche der 360°-Sendeoptik ist bevorzugt konkav. Eine konvexe Lichteintrittsfläche wirkt statt oder ergänzend zu einer Kollimierungsoptik für den Lichtsender. Eine konkave Lichtaustrittsfläche streut das Sendelicht in einen größeren Winkelbereich und damit in das Doppelkegelkomplement des Überwachungsbereichs auf. In manchen Fällen kann auch eine konvexe Lichtaustrittsfläche der 360°-Sendeoptik nützlich sein, um das Licht in einem engeren Winkelbereich zu bündeln. Ist die Lichtaustrittsfläche alternativ glatt, so wird nur eine Überwachungsebene beleuchtet.

Der Lichtsender weist bevorzugt eine Vielzahl einzelner oder in Gruppen aktivierbarer Lichtquellen auf. Beispielsweise ist eine Sendermatrix analog dem Bildsensor vorgesehen, allerdings in der Praxis meist mit einer im Vergleich zu den Lichtempfangselementen geringeren Anzahl von Sendeelementen. So wird nur jeweils ein Teil des Überwachungsbereichs beleuchtet, um Übersprechen und von Abbildungsfehlern erzeugte Mehrdeutigkeiten der örtlichen Zuordnung eines Objekts auf dem Bildsensor zu verringern.

Lichtsender und Bildsensor sind bevorzugt einander längs einer gemeinsamen Hauptachse, in der erste Hauptachse und zweite Hauptachse zusammenfallen, gegenüberliegend angeordnet, wobei eine Blende in einer Ebene senkrecht zu der gemeinsamen Hauptachse vorgesehen ist, die insbesondere eine mittige Öffnung aufweist. In dieser Anordnung sind Lichtsender, 360°-Sendeoptik, 360°-Empfangsoptik und Bildsensor auf der gemeinsamen Hauptachse aufgereiht. Die Blende verhindert ein optisches Übersprechen auf dem direkten Verbindungsweg von Lichtsender und Bildsensor. Weist sie eine mittige Öffnung auf, so entsteht ein Referenzkanal, in dem ein Sendelichtstrahl direkt auf den Bildsensor fällt, um beispielsweise optische Ausgangsleistung des Lichtsenders zu überprüfen oder um zu testen, ob zumindest die entsprechenden Pixel noch Licht empfangen und die korrekte Entfernung zu dem Lichtsender ermitteln. Darüber ist auch ein auswertungsbedingter Offset der Lichtlaufzeiten in allen Pixeln des Bildsensors korrigierbar.

In einer alternativen Ausführungsform sind Lichtsender und Bildsensor nebeneinander insbesondere auf einer gemeinsamen Leiterplatte angeordnet. Die Anordnung erleichtert die gemeinsame Ansteuerung von Lichtsender und Lichtempfänger, wobei eine gemeinsame Leiterplatte zudem kostengünstiger und leichter handhabbar ist. Die 360°-Empfangsoptik und die 360-Sendeoptik haben in dieser Ausführungsform zueinander parallele Hauptachsen, wobei auch die Position der 360°-Optiken in Hauptachsenrichtung etwas zueinander versetzt sind, damit das Sendelicht nicht direkt in die 360°-Empfangsoptik einstrahlt, gegebenenfalls unterstützt von einer zusätzliche Blende.

Die Auswerteeinheit ist bevorzugt dafür ausgebildet, Schutzfelder innerhalb des Überwachungsbereichs zu definieren und zumindest innerhalb der Schutzfelder die Anwesenheit von Objekten zu erkennen, wobei der Sensor einen sicheren Ausgang aufweist, über den bei Erkennung eines unzulässigen Objekteingriffs in ein Schutzfeld ein Abschaltsignal ausgebbar ist. In dieser typischen sicherheitstechnischen Anwendung erzeugt der Sensor ein binäres Abschaltsignal, um eine überwachte Maschine über den Sicherheitsausgang (OSSD, Output Signal Switching Device) sicherheitsgerichtet abzuschalten.

Dabei kann jeglicher Eingriff in ein Schutzfeld verboten sein, oder der Sensor unterscheidet zwischen zulässigen und unzulässigen Objekten, so dass beispielsweise der Eingriff einer vorab eingelernten Werkbank in dem Schutzfeld oder die Durchfahrt einer Palette zugelassen wird, ein Eingriff eines Körperteils oder ein nicht klassifizierbarer Eingriff dagegen zu einer Abschaltung führt. Das Schutzfeld wird zweidimensional in Polarkoordinaten, also Winkel in Umlaufrichtung und über die Lichtlaufzeit gemessene Entfernung in radialer Richtung, oder dreidimensional in Zylinderkoordinaten unter Einbeziehung einer Ablage gegenüber dem Horizont in dem Doppelkegelkomplement definiert. Dem Schutzfeld werden manchmal Warnfelder vorgelagert, wo ein unzulässiger Eingriff zunächst nur zu einem nicht notwendig sicheren Warnsignal führt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Querschnittsdarstellung durch eine erste Ausführungsform eines erfin- dungsgemäßen Sensors mit 360°-Optik
- Fig. 2: eine Querschnittsdarstellung durch die 360°-Optik gemäß Figur 1;
- Fig. 3: eine schematische Darstellung des Bildsensors zur Erläuterung der Abbil- dung des Überwachungsbereichs;
- Fig. 4: eine schematische Darstellung eines Bildsensors mit an die 360°-Optik angepasster Pixelanordnung;
- Fig. 5: eine Querschnittsdarstellung durch eine weitere Ausführungsform eines erfindungsgemäßen Sensors zur Überwachung nur einer Ebene;
- Fig. 6: eine Querschnittsdarstellung durch eine weitere Ausführungsform eines erfindungsgemäßen Sensors, bei dem Lichtsender und Bildsensor neben- einander angeordnet sind;
- Fig. 7a: eine Querschnittsdarstellung einer 360°-Empfangsoptik zur Erläuterung einer Sternblende;
- Fig. 7b: eine Draufsicht auf die 360°-Empfangsoptik mit Sternblende der Fig. 7a; und
- Fig. 7c: eine Querschnittsdarstellung einer weiteren Ausführungsform einer 360°- Empfangsoptik mit Sternblende.

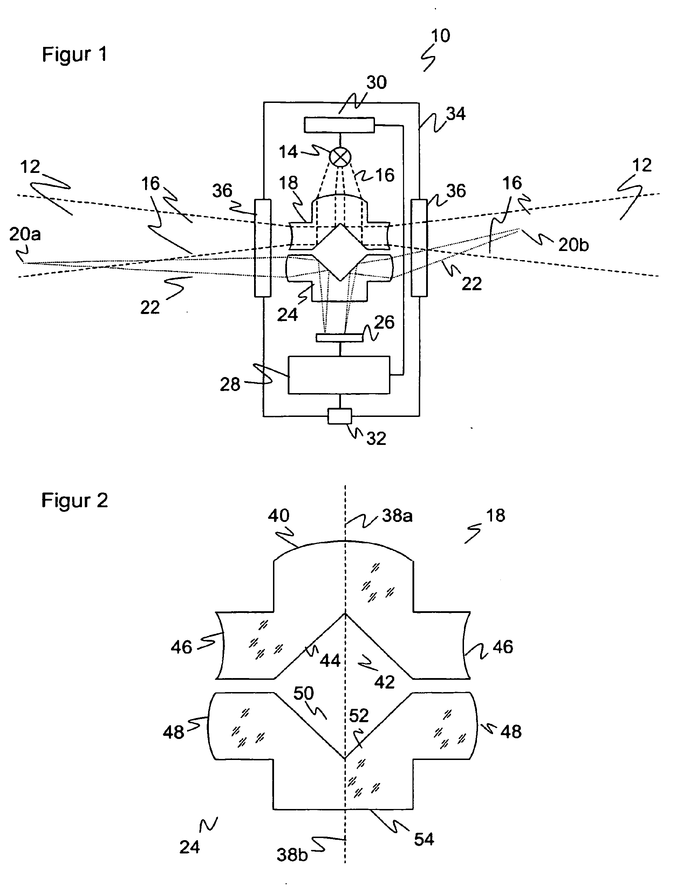

Figur 1 zeigt eine Querschnittsdarstellung einer ersten Ausführungsform eines optoelektronischen Sensors 10 zur Überwachung eines Überwachungsraums 12. Ein Lichtsender 14 erzeugt Sendelicht 16 in Form von Lichtpulsen oder amplitudenmoduliertem Licht in einem Nutzlichtfrequenzband. Der Lichtsender ist beispielsweise ein einzelne oder eine Anordnung mehrerer LEDs oder Laserlichtquellen. Besonders geeignete Lichtquellen sind wegen der hohen optischen Ausgangsleistung VCSEL-Arrays (Vertical Cavitiy Surface Emitting Laser). Ein VCSEL emittiert im Gegensatz zu einem Kantenemitter das Licht nicht aus der Kante des Halbleiterkristalls, sondern aus vergleichsweise großen Emissionsbereichen an der Oberseite des Chips.

Eine 360°-Sendeoptik 18 lenkt das Sendelicht 16 in den Überwachungsbereich 12 um und übernimmt dabei gleichzeitig die Aufgabe der Strahlumlenkung, der Strahlaufteilung und der Strahlbündelung. Dabei wird das Sendelicht 16 in eine Ebene senkrecht zu der optischen Achse des Lichtsenders 14 und in einen Winkelbereich um diese Ebene herum gelenkt. Der Aufbau des Sensors 10 ist rotationssymmetrisch zu einer vertikalen Mittelachse, so dass als Überwachungsbereich 12 ein 360°-Umgebungsbereich des Sensors 10 synchron ausgeleuchtet wird, dessen räumliche Gestalt das Komplement eines Doppelkegels ist.

Wie in Figur 1 beispielhaft für zwei Objektpunkte 20a-b gezeigt, wird das Sendelicht 16 in dem Überwachungsbereich 12 an Objekten reflektiert oder remittiert, und Empfangslicht 22 wird über eine 360°-Empfangsoptik 24 auf einen Bildsensor 26 abgebildet. Die 360°-Empfangsoptik 24 hat einen ähnlichen Grundaufbau wie die 360°-Sendeoptik 18 und wird mit dieser im Zusammenhang mit Figur 2 weiter unten noch näher erläutert. Der Ort, an dem das Empfangslicht 22 auf dem Bildsensor 26 auftrifft, liefert eine Winkelinformation sowie eine Information darüber, in welcher Höhe gegenüber dem Horizont ein Objekt 20a-b detektiert wird. Die Entfernung zu einem Objekt 20a-b ermittelt eine mit dem Bildsensor 26 verbundene Auswertungseinheit 28 mit einem phasenbasierten Lichtlaufzeitverfahren anhand eines Phasenunterschieds zu amplitudenmoduliertem Sendelicht 16 oder mit einem pulsbasierten Lichtlaufzeitverfahren anhand der Laufzeit von als Lichtpulsen ausgesandtem Sendelicht 16. Die Auswertungseinheit 28 kann ganz oder teilweise in den Bildsensor 26 integriert sein, so dass eine Lichtlaufzeit direkt in intelligenten Pixeln des Bildsensors 26 bestimmbar ist. Die Auswertungseinheit 28 ist drahtlos oder drahtgebunden mit einer Ansteuerungseinrichtung 30 des Lichtsenders 14 verbunden.

In der Auswertungseinheit 28 sind außerdem für sicherheitstechnische Anwendungen Schutzfelder definierbar, und die Auswertungseinheit 28 ist in der Lage, unzulässige Objekteingriffe in ein Schutzfeld zu erkennen und erforderlichenfalls ein sicheres binäres Abschaltsignal über einen Ausgang 32 auszugeben. Bei einem Einsatz in sicherheitstechnischen Anwendungen ist der Sensor 10 fehlersicher ausgelegt. Dies bedeutet unter anderem, dass der Sensor 10 seine funktionsrelevanten Elemente testen kann und dass der Ausgang 32 sicher, beispielsweise zweikanalig ausgelegt ist. Ebenso ist auch die Auswertungseinheit 28 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

Der Abstand zwischen der 360°-Sendeoptik 18 und der 360°-Empfangsoptik 24 führt zwar zu einem leichten Versatz zwischen beleuchtetem und überwachtem Bereich. Dies ist in der Praxis anders als in der Darstellung der Figur 1 bedeutungslos, da der Versatz gegenüber der Ausdehnung des Überwachungsbereichs 12 keine Rolle spielt. Somit stimmen der von dem Lichtsender 14 mit Hilfe der 360°-Sendeoptik 18 ausgeleuchtete Bereich und der von dem Bildsensor 26 aufgenommene Bereich zumindest nahezu überein, und die Sendeleistung wird optimal genutzt.

Der Sensor 10 ist in einem Gehäuse 34 mit einer umlaufenden Frontscheibe 36 untergebracht und somit zumindest im Bereich der Frontscheibe 36 kreiszylinderförmig. Alternativ zu einer Frontscheibe 36 können auch die 360°-Sendeoptik 18 und die 360°-Empfangsoptik 24 direkt in die Wand des Gehäuse eingefügt sein.

Figur 2 zeigt noch einmal vergrößert die 360°-Sendeoptik 18 und die 360°-Empfangsoptik 24, die beide als Rotationskörper mit einer Hauptachse 38a-b ausgebildet sind, welche in der Darstellung eine vertikale Mittelachse ist. Die Hauptachse 38a der 360°-Sendeoptik 18 ist zugleich die optische Achse des Lichtsender 14, die Hauptachse 38b der 360°-Empfangsoptik 24 die optische Achse des Bildsensors 26. Hier wie im Folgenden bezeichnen gleiche Bezugszeichen die gleichen oder einander entsprechende Merkmale.

Eine Lichteintrittsfläche 40 der 360°-Sendeoptik 18 an deren oberem Ende ist konvex und dient somit dazu, Sendelicht 16 zu einem Strahl zu bündeln. Gegenüber von der Lichteintrittsfläche 40 weist die 360°-Sendetoptik 18 eine konische Ausnehmung 42 auf, an deren Innenfläche 44 das Sendelicht 16 totalreflektiert und so um etwa 90° umgelenkt wird. Eine konkave umlaufende Lichtaustrittsfläche 46 streut das Sendelicht 16 in einem gewünschten Winkel in den Überwachungsbereich 12 auf.

Der Grundaufbau der 360°-Empfangsoptik 24 ist ganz ähnlich, und sämtliche Merkmale der 360°-Sendeoptik 18 können bei der 360°-Empfangsoptik 24 vorgesehen sein und umgekehrt. Das mittels der 360°-Sendeoptik 18 beleuchtete horizontale Umgebungsband des Überwachungsbereichs 12 wird durch die 360°-Empfangsoptik 24 auf den Bildsensor 26 abgebildet. Das Empfangslicht 22 tritt dabei durch eine umlaufende konvexe Lichteintrittsfläche 48 in die 360°-Empfangsoptik 24 ein, wird über eine konische Ausnehmung 50 durch Totalreflexion an deren Innenfläche 52 um etwa 90° umgelenkt und tritt durch eine ebene Lichtaustrittsfläche 54 wieder aus.

Die Formgebung der 360°-Optiken 18, 24 lässt in der Ausgestaltung der Lichteintrittsflächen 40, 48 und der Lichtaustrittsflächen 46, 54 viele Freiheitsgrade, um die Verteilung des Sendelichts 16 und/oder die Abbildung des Empfangslichts 22 zu optimieren. Damit kann auch der jeweilige Sichtbereich oder die Zuordnung von Objektbereichen zu Bildsensorbereichen geändert werden. Jeweils eine mehrteilige Optik wird praktisch in einem einzigen, sehr kostengünstigen und einfach zu justierenden Bauteil beispielsweise aus Kunststoff zusammengefasst. Prinzipiell ist aber auch denkbar, die 360°-Optiken 18, 24 mehrteilig aufzubauen, beispielsweise mit einem Kegel zur Strahlumlenkung und einer umlaufenden, ringförmigen Linse. Auch können zwischen Lichtsender 14 und Lichteintrittsfläche 40 eine zusätzliche strahlformende Optik beispielsweise zur Kollimation, Homogenisierung und gezielten Umverteilung des Sendelichts und zwischen Lichtaustrittsfläche 54 und Bildsensor 26 eine oder mehrere zusätzliche Objektivlinsen vorgesehen sein. Die Innenflächen 44, 52 der konischen Ausnehmungen 42, 50 können zusätzlich verspiegelt oder beschichtet werden.

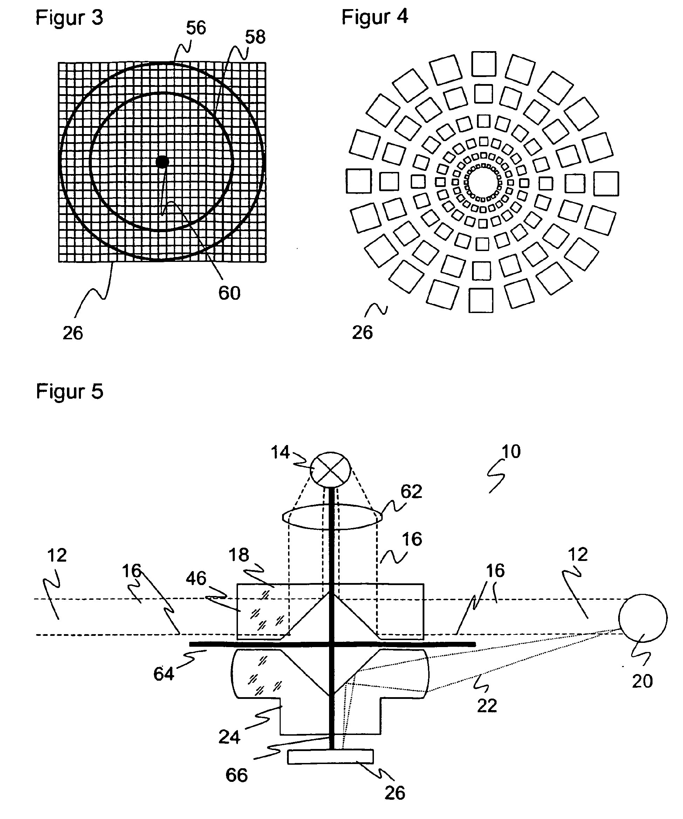

Figur 3 zeigt eine schematische Draufsicht auf den Bildsensor 26 in einer Ausführungsform als Matrixanordnung von Pixeln. Ein äußerer Kreis 56 bildet die Sichtgrenze der 360°-Empfangsoptik 24 und ein innerer Kreis 58 die Horizontlinie. In der Mitte des Bildsensors 26 liegt ein Totbereich 60 der 360°-Empfangsoptik 24. Aus der Position eines Pixels, das Empfangslicht 22 eines Objektpunkts 20a-b registriert, lassen sich zusätzlich zu der mittels Lichtlaufzeit bestimmten Objektentfernung über die Zuordnung zu einem horizontalen und einem vertikalen Sichtwinkel auch die beiden anderen Kugelkoordinaten der Objektposition gewinnen. Dabei entspricht der horizontale Sichtwinkel dem Polarwinkel, der in Figur 3 als Winkelposition auf einem zu dem Horizont konzentrischen Kreis abgetragen wird, und der vertikale Sichtwinkel dem Azimutwinkel, der als Position auf einem Radius der Kreise messbar ist. Dadurch sind zumindest in durch Sichtbereich, Pixelauflösung des Bildsensors 26 und Abbildungsfehler der 360°-Empfangsoptik 24 begrenztem Maße dreidimensionale Bildinformationen aus dem Überwachungsbereich 12 verfügbar.

Figur 4 zeigt eine weitere Ausführungsform eines Bildsensors 26 mit spezieller, an die 360°-Empfangsoptik 24 angepasster Form und Anordnung der Pixel. Die Pixel sind in konzentrischen Kreisen angeordnet und werden nach außen hin größer. Dazu muss abweichend von der Darstellung zur fertigungstechnischen Vereinfachung nicht notwendig auch noch die rechteckige Fläche jedes einzelnen Pixels tangential gedreht werden. Überhaupt ist die Form eines einzelnen Pixels nicht entscheidend und kann abweichen. Eine Anordnung gemäß Figur 4 lässt sich auch auf einem herkömmlichen matrixförmigen Bildsensor durch Zusammenfassen oder gemeinsames Auswerten von Pixeln in entsprechender Nachbarschaftsbeziehung emulieren.

Ganz entsprechend den verschiedenen Bildsensoren sind auch Mehrfachanordnungen von Lichtquellen in dem Lichtsender 14 denkbar, wobei dann jedes einzelne Leuchtelement einen zugehörigen Winkelbereich des Überwachungsbereichs 12 ausleuchtet. Dann können selektiv einzelne oder Gruppen der Leuchtelemente aktiviert werden, beispielsweise Ringe, Teilringe oder radiale Linien. Die Zuordnung von Teilbereichen des Überwachungsbereichs 12 auf Pixel des Bildsensors 26 ist nämlich wegen unvermeidlicher Abbildungsfehler der 360°-Empfangsoptik nicht immer eindeutig. Durch die selektive sequentielle Ausleuchtung von Teilbereichen lassen sich solche Mehrdeutigkeiten auflösen.

Figur 5 zeigt eine weitere Ausführungsform des Funktionskerns eines Sensors 10 im Querschnitt. Der wichtigste Unterschied zu der Ausführungsform gemäß Figur 1 liegt darin, dass hier lediglich eine Ebene als Überwachungsbereich 12 ausgeleuchtet wird, indem die Lichtaustrittsflächen 46 der 360°-Sendeoptik 18 flach statt konkav ausgebildet werden. Die 360°-Sendeoptik 18 dient nur zur Aufteilung des durch eine Linse 62 kollimierten Sendelichts 16 und zur Strahlablenkung um etwa 90°. Dadurch ist die 360°-Sendeoptik vereinfacht, und auch die Anforderungen an die Leistung des Lichtsenders 14 und die Abbildungsqualität der 360°-Empfangsoptik 24 sind geringer.

Zwischen 360°-Sendeoptik 18 und 360°-Empfangsoptik 24 ist eine Blende 64 angeordnet, um optisches Übersprechen des Sendelichts 16 auf den Bildsensor 26 zu unterdrücken. Über einen Referenzkanal 66 dringt ein zentraler Strahl des Sendelichts 16 gezielt durch eine zentrale Öffnung der Blende 64 hindurch und fällt in die Mitte des Bildsensors 26, wo ohnehin der Totbereich 60 der 360°-Empfangsoptik 24 liegt und somit keine Bildinformation verloren geht. Die Auswertungseinheit 28 kann über den Referenzkanal beispielsweise die optische Ausgangsleistung des Lichtsenders 14 überprüfen oder regeln, einen Temperaturgang oder sonstige Veränderungen nachkalibrieren, eine Referenzphase amplitudenmodulierten Lichts für ein phasenbasiertes Lichtlaufzeitverfahren erhalten oder zur Eichung oder zum Testen die direkte Entfernung zwischen Lichtsender 14 und Bildsensor 26 messen.

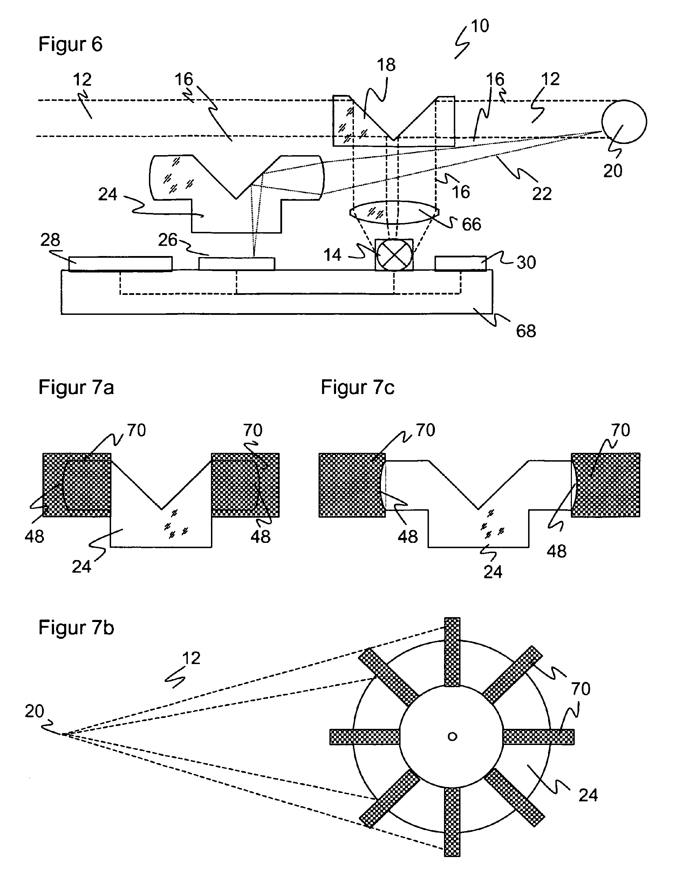

Figur 6 zeigt eine weitere Ausführungsform des Funktionskerns eines Sensors 10 im Querschnitt. Im Unterschied zu den zuvor beschriebenen Ausführungsformen sind hierbei Lichtsender 14 und Bildsensor 26 nebeneinander angeordnet. Dadurch besteht die Möglichkeit, Lichtsender 14, Bildsensor 26, Auswertungseinheit 28 und Ansteuerungseinrichtung 30 auf einer gemeinsamen Leiterplatte 68 unterzubringen.

Figur 7a zeigt in einer Querschnittsdarstellung und Figur 7b in einer Draufsicht die 360°-Empfangsoptik 24 mit einer Sternblende 70, also einer Blende, deren Flächen senkrecht zu der zentralen Ebene des Überwachungsbereichs 12 stehen und die wie die Strahlen eines Sterns radial nach außen zeigen. Dadurch wird die 360°-Empfangsoptik 24 und damit der Überwachungsbereich 12 in Sektoren unterteilt. Die Trennung in mehrere abbildende Sektoren verbessert die Abbildungsqualität der 360°-Empfangsoptik 24, weil so einfallendes Empfangslicht 22 unterdrückt wird, welches streifend unter hohen Einfallswinkeln auf die Lichteintrittsfläche 48 fällt. Solches Empfangslicht 22 könnte ohne eine Sternblende 70 durch Abbildungsfehler der 360°-Empfangsoptik 24 in falsch zugeordnete Bereiche auf dem Bildsensor 26 treffen, und derartige Fehler werden durch die Sternblende 70 zumindest auf Fehler innerhalb eines Sektors begrenzt. Damit werden erfindungsgemäß Messabstands- oder Objektgrößenverfälschungen verhindert oder zumindest verringert.

Bei einer Variante der Sternblende gemäß Figur 7c sind die Blendenelemente der 360°-Empfangsoptik 24 vorgeordnet, so dass keine Schlitze oder dergleichen vorgesehen sein müssen und die Fertigung erleichtert ist. Nochmals in einer anderen Variante ist die Lichteintrittsfläche 48 nicht homogen und rotationssymmetrisch, sondern bildet innerhalb eines durch die Sternblende 70 definierten Sektors eine oder mehrere Facetten, also Bereiche, in denen die Krümmung in Umlaufrichtung von der Krümmung einer Kreislinie abweicht. Dadurch wird die Sektorierung noch verstärkt.

Obwohl die Erfindung anhand von Ausführungsformen unter Bezugnahme auf einzelne Darstellungen beschrieben wurde, sind auch Mischformen mit Kombinationen aus Merkmalen von der Erfindung umfasst, die jeweils zu unterschiedlichen Figuren erläutert wurden. Insbesondere können die Blende 62 und der Referenzkanal 64 gemäß Figur 5, die verschiedenen Anordnungen des Lichtsenders 14 gegenüber dem Bildsensor 26 und die verschiedenen Ausgestaltungen der Außenflächen der 360°-Optiken 18, 24 auch in den jeweils anderen Ausführungsformen eingesetzt werden.

## Patentansprüche

1. Optoelektronischer Sensor (10) zur Überwachung eines Überwachungsbereichs (12) mit einem Lichtsender (14) zur Aussendung von Sendelicht (16) in den Überwachungsbereich (12), einem Bildsensor (26) mit einer Vielzahl von Empfangspixeln für aus dem Überwachungsbereich (12) remittiertes oder reflektiertes Empfangslicht (22) sowie mit einer Auswerteeinheit (28), welche dafür ausgebildet ist, aus der Lichtlaufzeit zwischen Aussendung des Sendelichts (16) und Lichtempfang in den Empfangspixeln Entfernungsinformationen zu gewinnen, wobei der optoelektronische Sensor (10) eine 360°-Empfangsoptik (24) in Form eines Rotationskörpers mit Rotationssymmetrie zu einer ersten Hauptachse (38b) umfasst, wobei die 360°-Empfangsoptik (24) an ihrem bezüglich der ersten Hauptachse (38b) unteren Ende eine Lichtaustrittsfläche (54) in einer Ebene senkrecht zu der ersten Hauptachse (38b) aufweist, **dadurch gekennzeichnet,**
**dass** die 360°-Empfangsoptik (24) weiterhin eine umlaufende Lichteintrittsfläche (48) konzentrisch und im Wesentlichen parallel zu der ersten Hauptachse (38b), so dass der Überwachungsbereich (12) eine Ebene senkrecht zu der ersten Hauptachse (38b) oder einen umlaufenden Winkelbereich einschließlich dieser Ebene bildet, sowie eine konische Ausnehmung (50) an einem der Lichtaustrittsfläche (54) bezüglich der ersten Hauptachse (38b) gegenüberliegenden oberen Ende aufweist und dass die 360°-Empfangsoptik (24) eine Sternblende (70) aufweist, welche den Überwachungsbereich (12) in Sektoren aufteilt.

2. Sensor (10) nach Anspruch 1,
wobei die Lichteintrittsfläche (48) und/oder die Lichtaustrittsfläche (54) der 360°-Empfangsoptik (24) konvex ist.

3. Sensor (10) nach Anspruch 1 oder 2,
wobei die konische Ausnehmung (50) der 360°-Empfangsoptik (24) einen Öffnungswinkel von 90° aufweist und/oder wobei die Flächen (52) der Ausnehmung (50) der 360°-Empfangsoptik (24) beschichtet oder verspiegelt, insbesondere als dichroitische Spiegelflächen ausgebildet sind.

4. Sensor (10) nach einem der vorhergehenden Ansprüche,
wobei sich die konische Ausnehmung (50) der 360°-Empfangsoptik (24) in Richtung der ersten Hauptachse (38b) so weit erstreckt wie die Lichteintrittsfläche (48).

5. Sensor (10) nach einem der vorhergehenden Ansprüche,
wobei die Empfangspixel in dem Bildsensor (26) in konzentrischen Kreisen angeordnet sind und insbesondere die Fläche der Empfangspixel von äußeren Kreisen zu inneren Kreisen hin abnimmt.

6. Sensor (10) nach einem der vorhergehenden Ansprüche,
wobei eine zusätzliche 360°-Sendeoptik (18) in Form eines Rotationskörpers mit Rotationssymmetrie zu einer zweiten Hauptachse (38a) vorgesehen ist, wobei die 360°-Sendeoptik (18) an ihrem bezüglich der zweiten Hauptachse (38a) oberen Ende eine Lichteintrittsfläche (40) in einer Ebene senkrecht zu der zweiten Hauptachse (38a), eine umlaufende Lichtaustrittsfläche (46) konzentrisch und im Wesentlichen parallel zu der zweiten Hauptachse (38a), so dass der von dem Lichtsender (14) beleuchtete Bereich eine Ebene senkrecht zu der zweiten Hauptachse (38a) oder einen umlaufenden Winkelbereich einschließlich dieser Ebene bildet, sowie eine konische Ausnehmung (42) an einem der Lichteintrittsfläche (40) bezüglich der zweiten Hauptachse (38a) gegenüberliegenden unteren Ende aufweist.

7. Sensor (10) nach Anspruch 6,
wobei die Lichteintrittsfläche (40) der 360°-Sendeoptik (18) konvex und/oder wobei die Lichtaustrittsfläche (46) der 360°-Sendeoptik (18) konkav ist.

8. Sensor (10) nach einem der vorhergehenden Ansprüche,
wobei der Lichtsender (14) eine Vielzahl einzelner oder in Gruppen aktivierbarer Lichtquellen aufweist.

9. Sensor (10) nach einem der vorhergehenden Ansprüche,
wobei Lichtsender (14) und Bildsensor (26) einander längs einer gemeinsamen Hauptachse (38a-b), in der erste Hauptachse (38b) und zweite Hauptachse (38a) zusammenfallen, gegenüberliegend angeordnet sind, und wobei eine Blende (64) in einer Ebene senkrecht zu der gemeinsamen Hauptachse (38a-b) vorgesehen ist, die insbesondere eine mittige Öffnung aufweist.

10. Sensor (10) nach einem der Ansprüche 1 bis 8,
wobei Lichtsender (14) und Bildsensor (26) nebeneinander insbesondere auf einer gemeinsamen Leiterplatte (68) angeordnet sind.

11. Sensor (10) nach einem der vorhergehenden Ansprüche,
wobei die Auswerteeinheit (28) dafür ausgebildet ist, Schutzfelder innerhalb des Überwachungsbereichs (12) zu definieren und zumindest innerhalb der Schutzfelder die Anwesenheit von Objekten (20) zu erkennen, wobei der Sensor (10) einen sicheren zweikanaligen Ausgang (32) aufweist, über den bei Erkennung eines unzulässigen Objekteingriffs in ein Schutzfeld ein Abschaltsignal ausgebbar ist.

12. Verfahren zur Überwachung eines Überwachungsbereichs (12), wobei Sendelicht (16) über eine 360°-Sendeoptik (18) in den Überwachungsbereich (12) ausgesandt und aus dem Überwachungsbereich (12) remittiertes oder reflektiertes Empfangslicht (22) in einem Bildsensor (26) mit einer Vielzahl von Empfangspixeln über eine 360°-Empfangsoptik (24) in Form eines Rotationskörpers mit Rotationssymmetrie zu einer ersten Hauptachse (38b) empfangen wird, wobei das empfangene Sendelicht (22) aus der 360°-Empfangsoptik (18) an deren bezüglich der ersten Hauptachse (38b) unteren Ende austritt und wobei aus der Lichtlaufzeit zwischen Aussendung des Sendelichts (16) und Lichtempfang in den Empfangspixeln Entfernungsinformationen gewonnen werden, **dadurch gekennzeichnet,**
**dass** das Empfangslicht (22) durch eine umlaufende Lichteintrittsfläche (48) in die 360°-Empfangsoptik (24) eintritt, wobei die Lichteintrittsfläche (48) konzentrisch und im Wesentlichen parallel zu der ersten Hauptachse (38b) angeordnet ist, und vor dem Austreten genau einmal reflektiert wird, nämlich an einer konischen Ausnehmung (52) an einem bezüglich der ersten Hauptachse (38b) oberen Ende der 360°-Empfangsoptik (48), und dass so ein Überwachungsbereich (12) überwacht wird, der eine Ebene senkrecht zu der ersten Hauptachse (38b) oder einen umlaufenden Winkelbereich einschließlich dieser Ebene bildet, wobei die 360°-Empfangsoptik mittels einer Sternblende (70) den Überwachungsbereich (12) in Sektoren unterteilt, so dass streifend unter hohen Einfallswinkeln einfallendes Empfangslicht (22) unterdrückt wird.

13. Verfahren nach Anspruch 12,
wobei in einem Überwachungszyklus mehrere Lichtquellen eines Lichtsenders (14), welcher das Sendelicht (16) erzeugt, nacheinander einzeln oder in Gruppen aktiviert werden, um jeweils nur einen Teil des Überwachungsbereichs (12) zu beleuchten.

14. Verfahren nach Anspruch 12 oder 13,
wobei innerhalb des Überwachungsbereichs (12) Schutzfelder definiert werden und bei Anwesenheit eines unzulässigen Objekts (20) in einem Schutzfeld ein sicherheitsgerichteter Abschaltbefehl zur Absicherung einer Gefahrenquelle ausgegeben wird.

## Claims

1. An optoelectronic sensor (10) for monitoring a monitored zone (12) having a light transmitter (14) for transmitting transmitted light (16) into the monitored zone (12), having an image sensor (26) with a plurality of reception pixels for received light (22) remitted or reflected from the monitored zone (12) as well as having an evaluation unit (28) which is designed to acquire distance information from the time of transit of light between the transmission of the transmitted light (16) and the light reception in the reception pixels, wherein the optoelectronic sensor (10) includes a 360° reception optics (24) in the form of a rotational body having rotational symmetry to a first main axis (38b), wherein the 360° reception optics (24) has a light emergence surface (54) in a plane perpendicular to the first main axis (38b) at its lower end with respect to the first main axis (38b), **characterised in that** the 360° reception optics (24) furthermore has a peripheral light entry surface (48) concentrically and substantially parallel to the first main axis (38b) so that the monitored zone (12) forms a plane perpendicular to the first main axis (38b) or forms a peripheral angular region including this plane and has a conical recess (50) at an end opposite to the light emergence surface (54) which is an upper end with respect to the first main axis (38b); and **in that** the 360° reception optics (24) has a star stop (70) which divides the monitored zone (12) into sectors.

2. A sensor (10) in accordance with claim 1,
wherein the light entry surface (48) and/or the light emergence surface (54) of the 360° reception optics (24) is convex.

3. A sensor (10) in accordance with claim 1 or claim 2,
wherein the conical recess (50) of the 360° reception optics (24) has an opening angle of 90°; and/or wherein the surfaces (52) of the recess (50) of the 360° reception optics (24) are made coated or mirror-coated, in particular as dichroitic mirror surfaces.

4. A sensor (10) in accordance with any one of the preceding claims,
wherein the conical recess (50) of the 360° reception optics (24) extends as far as the light entry surface (48) in the direction of the first main axis (38b).

5. A sensor (10) in accordance with any one of the preceding claims,
wherein the reception pixels are arranged in concentric circles in the image sensor (26) and the surface of the reception pixels in particular reduces from outer circles to inner circles.

6. A sensor (10) in accordance with any one of the preceding claims,
wherein an additional 360° transmission optics (18) is provided in the form of a rotational body having rotational symmetry to a second main axis (38a), wherein the 360° transmission optics (18) has a light entry surface (40) in a plane perpendicular to the second main axis (38a) at its upper end with respect to the second main axis (38a), a peripheral light emergence surface (46) concentrically and substantially parallel to the second main axis (38a) so that the region illuminated by the light transmitter (14) forms a plane perpendicular to the second main axis (38a) or a peripheral angular region including this plane, and also has a conical recess (42) at an end opposite the light entry surface (40) which is a lower end with respect to the second main axis (38a).

7. A sensor (10) in accordance with claim 6,
wherein the light entry surface (40) of the 360° transmission optics (18) is convex; and wherein the light emergence surface (46) of the 360° transmission optics (18) is concave.

8. A sensor (10) in accordance with any one of the preceding claims,
wherein the light transmitter (14) has individual light sources or a plurality of light sources actuable in groups.

9. A sensor (10) in accordance with any one of the preceding claims,
wherein the light transmitter (14) and the image sensor (26) are arranged opposite one another along a common main axis (38a-b) in which the first main axis (38b) and the second main axis (38a) coincide; and wherein a stop (64) is provided in a plane perpendicular to the common main axis (38a-b) which in particular has a central aperture.

10. A sensor (10) in accordance with any one of the claims 1 to 8,
wherein the light transmitter (14) and the image sensor (25) are arranged next to one another, in particular on a common circuit board (68).

11. A sensor (10) in accordance with any one of the preceding claims,
wherein the evaluation unit (28) is designed to define protected fields within the monitored zone (12) and to recognise the presence of objects (20) at least within the protected fields, wherein the sensor (10) has a secure two-channel output (32) over which a switch-off signal can be output on recognition of an unauthorised object intrusion into a protected field.

12. A method of monitoring a monitored zone (12), wherein transmitted light (16) is transmitted via a 360° transmission optics (18) into the monitored zone (12) and received light (22) remitted or reflected from the monitored zone (12) is received in an image sensor (26) having a plurality of reception pixels via a 360° reception optics (24) in the form of a rotational body having rotational symmetry to a first main axis (38b), wherein the received transmitted light (22) from the 360° reception optics (18) emerges at its lower end with respect to the first main axis (38b) and wherein distance information is acquired from the transit time of light between the transmission of the transmitted light (16) and the light reception in the reception pixels, **characterised in that**
the received light (22) enters through a peripheral light entry surface (48) into the 360° reception optics (24), with the light entry surface (48) being arranged concentrically and substantially parallel to the first main axis (38b) and being reflected exactly once before the emergence, namely at a conical recess (52) at an upper end of the 360° reception optics (48) with respect to the first main axis (38b);
and **in that** a monitored zone (12) is thus monitored which forms a plane perpendicular to the first main axis (38b) or a peripheral angular region including this plane, with the 360° reception optics being divided into sectors by means of a star stop (70) so that received light (22) is suppressed which is incident in a grazing manner at high angles of incidence.

13. A method in accordance with claim 12,
wherein a plurality of light sources of a light transmitter (14) which generates the transmitted light (16) are activated individually or in groups after one another in a monitored zone in order in each case to illuminate only a part of the monitored zone (12).

14. A method in accordance with claim 12 or claim 13,
wherein protected fields are defined within the monitored zone (12) and a safety-directed switch-off command is output to secure a danger source on the presence of an unauthorised object (20) in a protected field.

## Revendications

1. Capteur optoélectronique (10) pour la surveillance d'une zone de surveillance (12) comprenant un émetteur de lumière (14) pour émettre une lumière émise (16) vers la zone de surveillance (12), un capteur d'images (26) avec une pluralité de pixels récepteurs pour de la lumière reçu (22) réémise ou réfléchie depuis la zone de surveillance (12), et une unité d'évaluation (28), laquelle est réalisée pour obtenir à partir du temps de parcours de la lumière entre l'émission de la lumière émise (16) et la réception de lumière dans les pixels récepteurs des informations d'éloignement, ledit capteur optoélectronique (10) comprenant une optique réceptrice sur 360° (24) sous la forme d'un corps de révolution à symétrie de révolution par rapport à un premier axe principal (38b), ladite optique réceptrice sur 360° (24) comprenant, à son extrémité inférieure par référence au premier axe principal (38b), une surface de sortie de lumière (54) dans un plan perpendiculaire au premier axe principal (38b),
**caractérisé en ce que**
l'optique réceptrice sur 360° (24) comprend en outre une surface d'entrée de lumière périphérique (48) concentrique et sensiblement parallèle au premier axe principal (38b), de sorte que la zone de surveillance (12) forme un plan perpendiculaire au premier axe principal (38b) ou bien une plage angulaire périphérique qui inclut ce plan, ainsi qu'un évidement conique (50) à une extrémité supérieure, opposée à la surface de sortie de lumière (54) par référence au premier axe principal (38b), et **en ce que** l'optique réceptrice sur 360° (24) comprend un cache en étoile (70) qui subdivise la zone de surveillance (12) en secteurs.

2. Capteur (10) selon la revendication 1,
dans lequel la surface d'entrée de lumière (48) et/ou la surface de sortie de lumière (54) de l'optique réceptrice sur 360° (24) est convexe.

3. Capteur (10) selon la revendication 1 ou 2,
dans lequel l'évidement conique (50) de l'optique réceptrice sur 360° (24) présente un angle d'ouverture de 90°, et les surfaces (52) de l'évidement (50) de l'optique réceptrice sur 360° (24) sont réalisées avec un revêtement ou sont spécularisées, en particulier pour former des surfaces de miroirs dichroïques.

4. Capteur (10) selon l'une des revendications précédentes,
dans lequel l'évidement conique (50) de l'optique réceptrice sur 360° (24) s'étend en direction du premier axe principal (38b) aussi loin que la surface d'entrée de lumière (48).

5. Capteur (10) selon l'une des revendications précédentes,
dans lequel les pixels récepteurs sont agencés dans le capteur d'images (26) en cercles concentriques, et en particulier en ce que la surface des pixels récepteurs diminue depuis des cercles extérieurs vers des cercles intérieurs.

6. Capteur (10) selon l'une des revendications précédentes,
dans lequel il est prévu une optique émettrice sur 360° (18) additionnelle sous la forme d'un corps de révolution à symétrie de révolution par rapport à un second axe principal (38a), ladite optique émettrice sur 360° (18) comprenant, à son extrémité supérieure par référence au second axe principal (38a), une surface d'entrée de lumière (40) dans un plan perpendiculaire au second axe principal (38a), une surface de sortie de lumière (46) périphérique concentrique et sensiblement parallèle au second axe principal (38a), de sorte que la région éclairée par l'émetteur de lumière (14) forme un plan perpendiculaire au second axe principal (38a) ou bien une plage angulaire périphérique qui inclut ce plan, ainsi qu'un évidement conique (42) à une extrémité inférieure opposée à la surface d'entrée de lumière (40) par référence au second axe principal (38a).

7. Capteur (10) selon la revendication 6,
dans lequel la surface d'entrée de lumière (40) de l'optique émettrice sur 360° (18) est convexe et/ou dans lequel la surface de sortie de lumière (46) de l'optique émettrice sur 360° (18) est concave.

8. Capteur (10) selon l'une des revendications précédentes,
dans lequel l'émetteur de lumière (14) comprend une pluralité de sources de lumière qui peuvent être activées individuellement ou en groupes.

9. Capteur (10) selon l'une des revendications précédentes,
dans lequel l'émetteur de lumière (14) et le capteur d'images (26) sont agencés à l'opposé l'un de l'autre le long d'un axe principal commun (38a-b), dans lequel coïncide le premier axe principal (38b) et le second axe principal (38a), et dans lequel il est prévu un cache (64) dans un plan perpendiculaire à l'axe principal commun (38a-b), qui présente en particulier une ouverture centrale.

10. Capteur (10) selon l'une des revendications 1 à 8,
dans lequel l'émetteur de lumière (14) et le capteur d'images (25) sont agencés l'un à côté de l'autre, en particulier sur une carte à circuits imprimés commune (68).

11. Capteur (10) selon l'une des revendications précédentes,
dans lequel l'unité d'évaluation (28) est réalisée en vue de définir des champs protégés à l'intérieur de la zone de surveillance (12) et de reconnaître la présence d'objets (20) au moins à l'intérieur des champs protégés, le capteur (10) comprenant une sortie sécurisée à deux canaux (32), via lesquels un signal de coupure peut être délivré en cas de reconnaissance d'une intervention inadmissible d'un objet dans un champ protégé.

12. Procédé pour la surveillance d'une zone de surveillance (12), dans lequel on émet une lumière émise (160) via une optique émettrice sur 360° (18) vers la zone de surveillance (12) et on reçoit la lumière reçue (22) réémise ou réfléchie depuis la zone de surveillance (12) dans un capteur d'images (26) avec une pluralité de pixels récepteurs via une optique réceptrice sur 360° (24) sous la forme d'un corps de révolution à symétrie de révolution par rapport à un premier axe principal (38b), dans lequel la lumière reçue (22) sort de l'optique réceptrice sur 360° (18) à son extrémité inférieure par référence au premier axe principal (38b), et on obtient des informations d'éloignement à partir du temps de parcours de la lumière entre l'émission de la lumière émise (16) et la réception de lumière dans les pixels récepteurs,
**caractérisé en ce que**
la lumière reçue (22) pénètre dans l'optique réceptrice sur 360° (24) à travers une surface d'entrée de lumière périphérique (38), ladite surface d'entrée de lumière (48) étant agencée concentriquement et sensiblement parallèle au premier axe principal (38b), et est réfléchie exactement une fois avant de sortir, à savoir au niveau d'un évidement conique (52) à une extrémité, supérieure par référence au premier axe principal (38b), de l'optique réceptrice sur 360° (48), et **en ce que** l'on surveille ainsi une zone de surveillance (12) qui forme un plan perpendiculaire au premier axe principal (38b) ou encore une plage angulaire périphérique qui inclut ce plan, dans lequel l'optique réceptrice sur 360° subdivise au moyen d'un cache en étoile (70) la zone de surveillance (12) en secteurs, de sorte que la lumière reçue (22) qui tombe de manière tangente sous des angles d'incidence élevés est inhibée.

13. Procédé selon la revendication 12,
dans lequel dans un cycle de surveillance plusieurs sources de lumière d'un émetteur de lumière (14), qui engendre la lumière émise (16), sont activées les unes après les autres individuellement ou en groupes, afin d'éclairer respectivement seulement une partie de la zone de surveillance (12).

14. Procédé selon la revendication 12 aux 13,
dans lequel des champs protégés sont définis à l'intérieur de la zone de surveillance (12) et, en cas de présence d'un objet inadmissible (20) dans un champ protégé, on délivre un ordre de coupure, à vocation de sécurité, pour la sécurisation d'une source de danger.
